# EUROPEAN PATENT SPECIFICATION

(11) **EP 2 236 398 B1**
(45) Date of publication and mention of the grant of the patent: **09.05.2012**
(21) Application number: 10154265.2
(22) Date of filing: 22.02.2010
(51) Int. Cl.: B62J 6/04

(54) **Saddle ride type vehicle**
Motorrad
Véhicule à monture de selle

(30) Priority: 31.03.2009 JP 2009087775
(43) Date of publication of application: 06.10.2010
(73) Proprietor: Honda Motor Co., Ltd., Tokyo 107-8556 (JP)
(72) Inventor: Iida, Rinatsu, Saitama 351-0193 (JP); Tanabe, Gen, Saitama 351-0193 (JP)
(74) Representative: Liska, Horst

(56) References cited:
- EP-A1- 1 700 779
- EP-A1- 1 785 341
- WO-A1-03/035457
- US-A1- 2007 025 113

## Description

### Technical Field

The present invention relates to a saddle ride type vehicle, particularly to a technology for improving a rear combination lamp mounting structure.

### Background Art

In relation to a conventional motorcycle which is a saddle ride type vehicle, there has been known a rear combination lamp mounting structure in which a rear combination lamp as a whole can be drawn out rearwards from a rear cowl, and a tail lamp bulb and a pair of winker bulbs can be replaced while the rear combination lamp is in the drawn-out state (see, for example, Japanese Patent Registration No. 4,104344). The document EP 1 785 341 shows a structure with the features of the preamble of claim 1.

### Problem to be Solved by the Invention

In the rear combination lamp mounting structure according to the exemplary prior art, however, maintainability has been enhanced by facilitating the dismounting of the rear combination lamp as a whole, and, accordingly, there has been a request for a rear combination lamp mounting structure which enables the maintenance to be carried out by a more simpler operation.

The present invention has been made in consideration of the above-mentioned circumstances. Accordingly, it is an object of the present invention to provide a saddle ride type vehicle in which maintenance of a rear combination lamp can be carried out easily.

### Means for Solving the Problem

In order to attain the above object, the invention as described in claim 1 provides a saddle ride type vehicle including, at a rear portion of a body frame, a rear cowl for covering a rear portion of the body frame, the rear cowl provided at its upper portion with an opening capable of being closed with a rider's seat, and a rear combination lamp having a tail lamp and a left-right pair of winkers, with a rear portion of the rear combination lamp being disposed in a rear portion of the rear cowl in the state of being exposed at the rear end of the rear cowl so as to face rearwards, characterized in that stays are provided on the upper side in the rear combination lamp, the vehicle further includes a center cover for covering the upper side of a tail lamp part of the rear combination lamp, and winker covers for covering the upper side of winker parts and winker sockets in the rear combination lamp, and the winker cover has an arm part located on the lower side of the rider's seat and extending toward the inner side in the vehicle width direction, the arm part being fastened to the stay.

In this saddle ride type vehicle, the arm part possessed by each of the winker covers and extending toward the inner side in the vehicle width direction is fastened to the stay of the rear combination lamp. This ensures that when the fastening of the arm part is released, it is possible to dismount only the winker cover. Removal of the winker cover causes the winker socket to be exposed, whereby easy replacement is facilitated.

The invention as described in claim 2 is characterized in that, in addition to the constitution of the invention described in claim 1, the center cover is provided at side portions thereof with ribs extending downwards, the rib is provided with a slit, and the winker cover is provided, at its side portion on the inner side in the vehicle width direction, with a side part claw to be locked in the slit in the center cover.

In this saddle ride type vehicle, the side part claw of the winker cover is slidingly locked in the slit formed, along the vehicle front-rear direction, in the rib droopingly provided on the center cover, whereby movement (backlash) of the winker cover in the slit width direction is restrained. Besides, at the time of dismounting the winker cover, the winker cover can be kept tentatively fixed to the center cover by the slit and the side part claw, so that workability can be enhanced.

The invention as described in claim 3 is characterized in that, in addition to the constitution of the invention described in claim 1, a rear fender disposed on the lower side of the rear cowl and covering a rear wheel on the upper side of the rear wheel is mounted, and a lower surface of the winker cover is fastened by a lower surface of the rear fender.

In this saddle ride type vehicle, an upper portion of the winker cover is fixed to the stay by the arm part, and a lower portion of the winker cover is fixed to the rear fender, whereby fixation strength of the winker cover is enhanced.

The invention as described in claim 4 is characterized in that, in addition to the constitution of the invention described in claim 1, the stay is a stay part formed at a reflector back surface of the rear combination lamp, and the arm part of the winker cover and the center cover are co-fastened to the stay part of the rear combination lamp.

In this saddle ride type vehicle, formation of the stay part at the base of the rear combination lamp makes it possible to fix both the winker cover and the center cover to the same location, without using any fixing member for exclusive use.

The invention as described in claim 5 is characterized in that, in addition to the constitution of the invention described in claim 1, the winker covers and the center cover are provided at their rear portions with rear part claws each of which is engaged with a recess formed in an upper surface of the rear combination lamp.

In this saddle ride type vehicle, rear portions of the winker covers and the center cover are engaged with and fixed to the rear combination lamp by the claws and the recesses, which makes it possible to achieve space savings as compared with a fixing structure based on the use of fastening members.

The invention as described in claim 6 is characterized in that, in addition to the constitution of the invention described in claim 1, the center cover is provided at rear portions thereof with first recesses for engagement with rear portions of inside edges of the winker covers, and the winker cover is provided at a rear portion of a lower surface thereof with a second recess for engagement with a rear edge of the center cover.

In this saddle ride type vehicle, the forwardly facing second recess of the winker cover is fitted to the rearwardly facing first recess provided at the rear portion of the center cover, in the manner of facing forwards, whereby the rear portions of the center cover and the winker cover are engaged with each other through projection-recess engagement. Therefore, mating and holding of the winker covers and the center cover at their rear portions can be performed more assuredly.

### Effect of the Invention

According to the saddle ride type vehicle as described in claim 1, release of the fastening of the winker cover arm part in the condition where the seat has been removed makes it possible to dismount only the winker cover from the vehicle. Removal of the winker cover causes the winker socket in the rear combination lamp to be exposed. Therefore, maintenance of the winkers can be carried out by only dismounting the winker covers.

According to the saddle ride type vehicle as described in claim 2, the winker cover and the center cover are locked to each other by the slit and the claw, so that the winker cover can be prevented from backlash in the mounted state. In addition, at the time of dismounting the winker cover, the fastening of the winker cover arm part is released, and thereafter the winker cover is slid in the direction along the slit to release the locking between the claw and the slit, whereon it suffices to draw out the winker cover toward the outer side. Therefore, the winker cover can be dismounted easily.

According to the saddle ride type vehicle as described in claim 3, the winker covers are fastened in the vertical direction, whereby vertical vibrations of the winker covers can be prevented.

According to the saddle ride type vehicle as described in claim 4, stays can be provided in the form of the stay parts of the rear combination lamp, whereby the number of component parts is restrained from increasing. In addition, since the winker cover arm parts and the center cover are co-fastened by the stay parts, the number of fastening parts can be reduced.

According to the saddle ride type vehicle as described in claim 5, the gaps between the rear combination lamp upper surface and the winker covers as well as the center cover can be reduced as much as possible, so that vibrations of the rear ends of both the covers can be restrained.

According to the saddle ride type vehicle as described in claim 6, mating and holding of the winker covers and the center cover at their rear portions can be achieved more assuredly.

### Brief Description of the Drawings

FIG. 1 is a side view showing a basic configuration of a motorcycle according to an embodiment of the present invention.
FIG. 2 is a left side view of a vehicle body.
FIG. 3 is a side view of a left rear portion of the vehicle body.
FIG. 4 is a plan view of a pillion seat and a rear center cowl.
FIG. 5 is a plan view of the rear center cowl in the condition where the pillion seat has been dismounted.
FIG. 6 is a perspective view of an opening in a rear center cowl.
FIG. 7 is a perspective view showing a condition where rear winker covers have been dismounted from the condition shown in FIG. 6.
FIG. 8 is a plan view of a co-fastened portion of the rear center cowl.
FIG. 9 is a plan view of a rear portion of a vehicle body, with the pillion seat mounted thereto.
FIG. 10 is a side view of a left rear portion of the vehicle body, as seen through the winker cover.
FIG. 11 is a side view of a right winker cover as viewed from the inner side.
FIG. 12 is a bottom view of a left winker cover as viewed from the lower side of a rear fender.
FIG. 13 is a sectional view taken along line d-d of FIG. 5.
FIG. 14 is a sectional view taken along line e-e of FIG. 3.
FIG. 15 is a side view taken along line f-f of FIG. 8.
FIG. 16 is a sectional view taken along line g-g of FIG. 9.
FIG. 17 is a sectional view taken along line h-h of FIG. 9.
FIG. 18 is a sectional view taken along line i-i of FIG. 9.
FIG. 19 is a sectional view taken along line j-j of FIG. 9.
FIG. 20 is a sectional view taken along line k-k of FIG. 10.
FIG. 21 is a sectional view taken along line I-I of FIG. 10.
FIG. 22 is a perspective view pertaining to a modification in which the rear fender is formed with stay parts.

### Mode for Carrying Out the Invention

Now, an embodiment of the saddle ride type vehicle according to the present invention will be described in detail below referring to the drawings. Incidentally, the drawings are to be looked at according to the posture of reference symbols. In the following description, the front and rear sides, the left and right sides, and the upper and lower sides are those as viewed from the driver of the vehicle. In the drawings, the front side of the vehicle is denoted by Fr, the rear side by Rr, the left side by L, the right side by R, the upper side by U, and the lower side (downward side) by D.

The present invention is preferably applicable, for example, to a motorcycle, which is a saddle ride type vehicle.

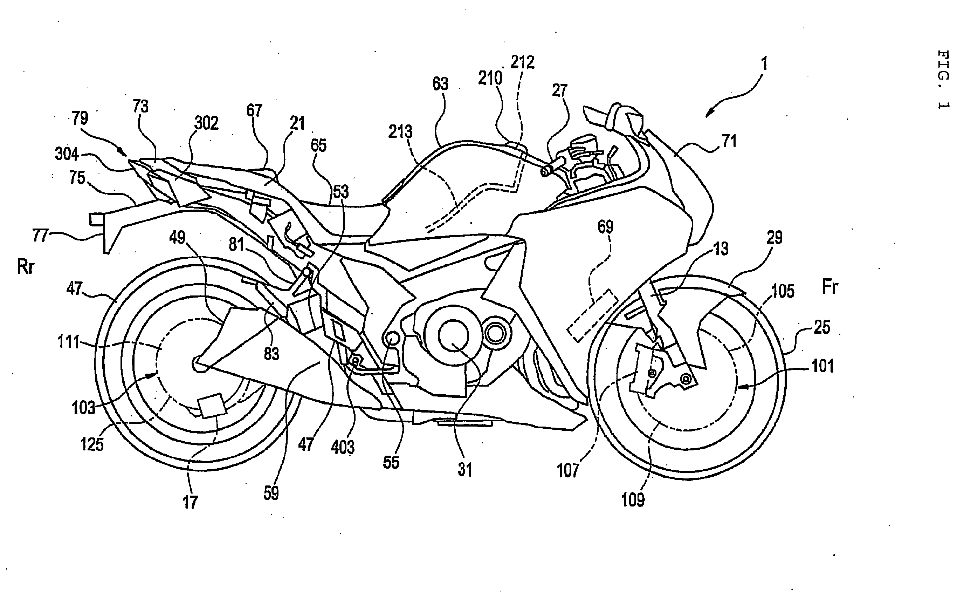

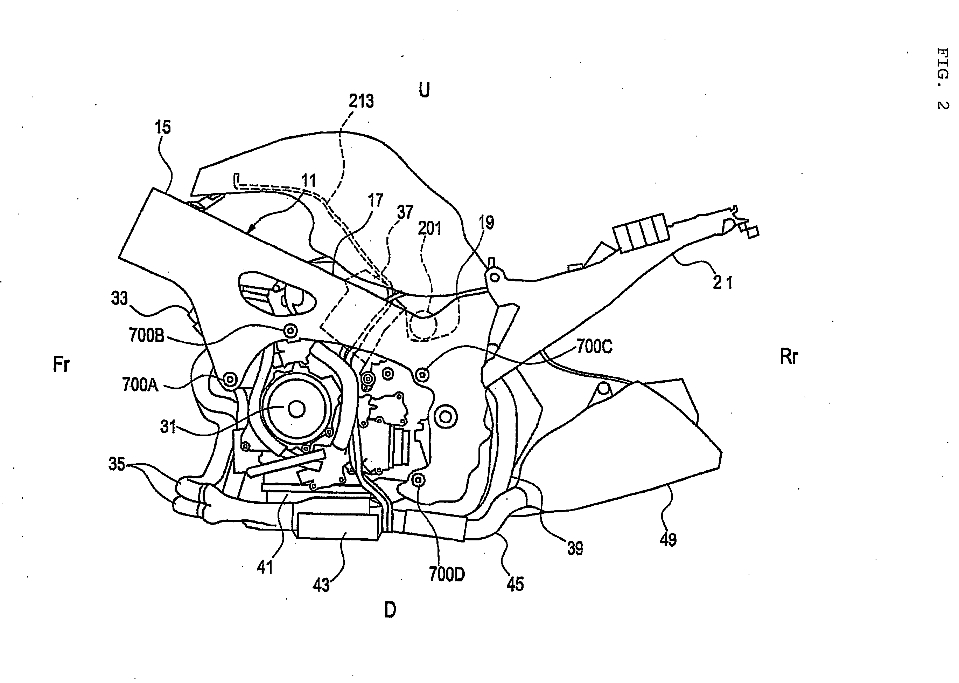

FIG. 1 is a side view showing a basic configuration of a motorcycle according to an embodiment of the present invention, and FIG. 2 is a left side view of a vehicle body.

A body frame 11 of the motorcycle 1 includes a head pipe 15 for steerably bearing a front fork 13, a left-right pair of main frames 17 extending rearwardly downwards from the head pipe 15, a left-right pair of intermediate frames 19 being continuous with the rear ends of the main frames 17 and extending vertically, and a left-right pair of seat rails 21 extending rearwardly upwards from upper portions of the intermediate frames 19.

A front wheel 25 is rotatably supported on the lower ends of the front fork 13, a handle bar 27 is connected to the upper end of the front fork 13, and a front fender 29 covering the upper side of the front wheel 25 is supported by the front fork 13.

Disc brakes 101 and 103 shown in FIG. 1 are mounted respectively to the front wheel 25 and a rear wheel 47. For example, the disc brake 101 for the front wheel 25 has a brake disc 105 which is fixed to the front wheel 25 and rotated as one body with the front wheel 25, and a caliper 107 mounted to the front fork 13. The caliper 107 incorporates a left-right pair of friction pads which are moved toward and away from each other through a piston (not shown) by an oil pressure generated from a master cylinder (not shown). The friction pads clamp therebetween braking surfaces 109, 125 at both side surfaces of the brake discs 105, 111 to thereby apply a braking force to the front wheel 25 and the rear wheel 47.

A V-type water-cooled four-cylinder engine 31 is suspended from the main frames 17 and the intermediate frames 19 in the manner of being supported at first support parts 700A, second support parts 700B, third support parts 700C, and fourth support parts 700D shown in FIG. 2. Front-side cylinder exhaust pipes 35 are extended forwards from front-side cylinders 33 of the engine 31. Rear-side cylinder exhaust pipes 39 are once extended rearwards from rear-side cylinders 37 of the engine 31, are then extended forwards, and are again extended rearwards. The front-side cylinder exhaust pipes 35 and the rear-side cylinder exhaust pipes 39 are extended downwards along a front surface of a crankcase 41 of the engine 31, and is located on the lower side of the crankcase 41 by way of a catalyst chamber (CAT chamber) 43.

The catalyst chamber 43 is connected to a rear collecting pipe 45 through a collecting pipe which will be described later. The rear collecting pipe 45 is disposed in a space formed between a lower portion of the crankcase 41 and the rear wheel 47, and is connected to a muffler 49 extending to the vehicle body right side of the rear wheel 47. The rear collecting pipe 45 is supported on the lower side of the crankcase 41.

The muffler 49 is disposed to intersect, in side view, a swing arm 53 which supports the rear wheel 47 at a rear end portion thereof. The swing arm 53 has a front end portion supported by a pivot shaft 55 at a lower portion of the muffler 49 so as to be swingable in the vertical direction, and is suspended by a rear cushion 57 provided between itself and an upper end portion of a pivot plate 51. Step holders 407 having rider steps 403 are provided between the front wheel 25 and the rear wheel 47.

An output of the engine 31 is transmitted to the rear wheel 47 through a drive shaft 59. The drive shaft 59 is incorporated in the swing arm 53, which is disposed on the left side of the engine 31 as viewed from the rider facing toward the front side Fr in the running direction of the motorcycle.

A fuel tank 63 supported on the main frames 17 is disposed on the upper side of the engine 31. A rider's seat (main seat) 65 on which to seat the rider is disposed on the rear side of the fuel tank 63 in the manner of being supported by the seat rails 21. A pillion seat 67 as a rider's seat on which to seat a pillion passenger is disposed on the rear side of the main seat 65.

A canister 201 is provided on the lower side of a rear portion of the fuel tank 63. The canister 201 captures volatile fuel gases in the fuel tank 63, without permitting the gasses from leaking to the exterior. In FIG. 1, symbol 210 denotes a lid, 212 denotes an oil feed port, and 213 denotes a purge pipe.

A radiator 69 is disposed on the front side of the engine 31. The front side of the head pipe 15 of the body frame 11 is covered with a front cowl 71 made of synthetic resin. In addition, front portions of the main frames 17, the radiator 69, and front and lower portions of the engine 31 are covered, on both lateral sides thereof, by lower side cowls (not shown) continuous with the front cowl 71.

A rear cowl 73 for covering a lower portion of the body frame 11 and a rear fender 75 disposed on the lower side of the rear cowl 73 so as to cover the rear wheel 47 on the upper side of the rear wheel 47 are mounted to rear portions of the body frame 11. Besides, the rear fender 75 is provided with a left-right pair of plate mounting parts 77 for mounting a license plate (not shown).

A rear combination lamp 79 in which a left-right pair of winkers 302 and a tail-and-stop lamp 304 between the left and right winkers 302 are united together is disposed inside the rear cowl 73 in such a manner that a rear portion of the rear combination lamp 79 is exposed at the rear end of the rear cowl 73 so as to face rearwards. In FIG. 1, symbol 81 denotes pillion step holders provided on the left and right sides of the vehicle body, and symbol 83 denotes pillion steps.

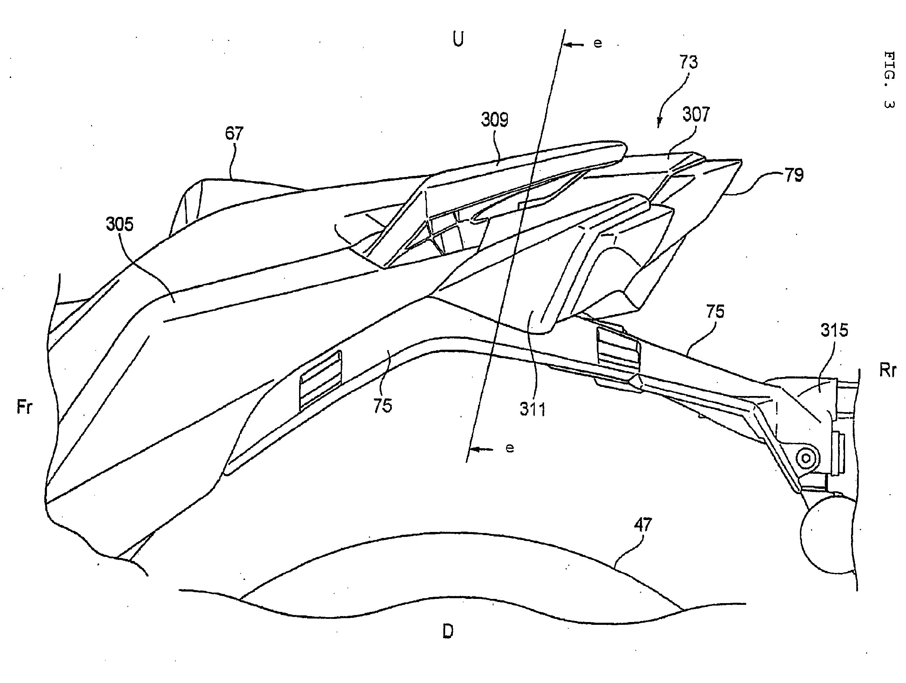

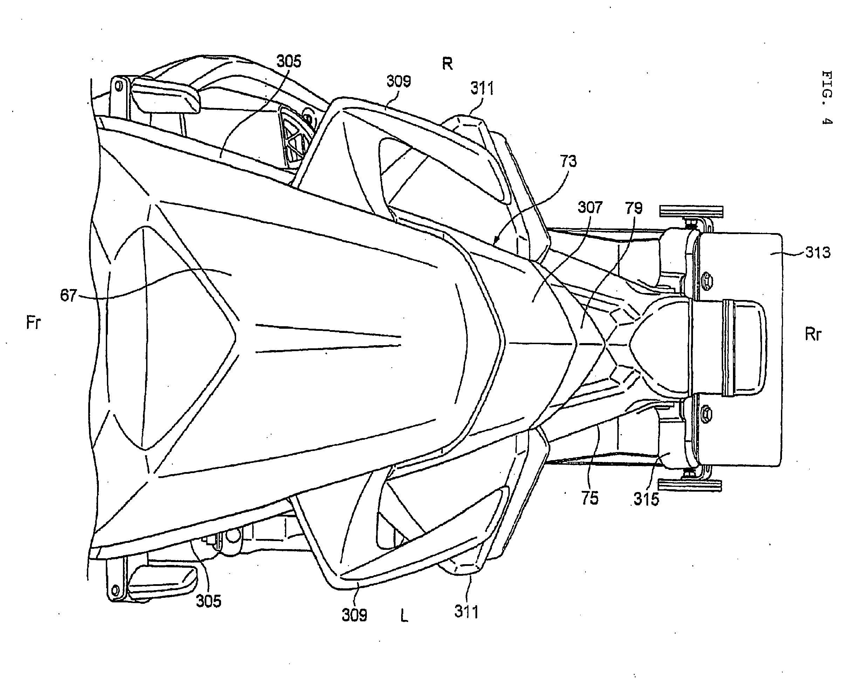

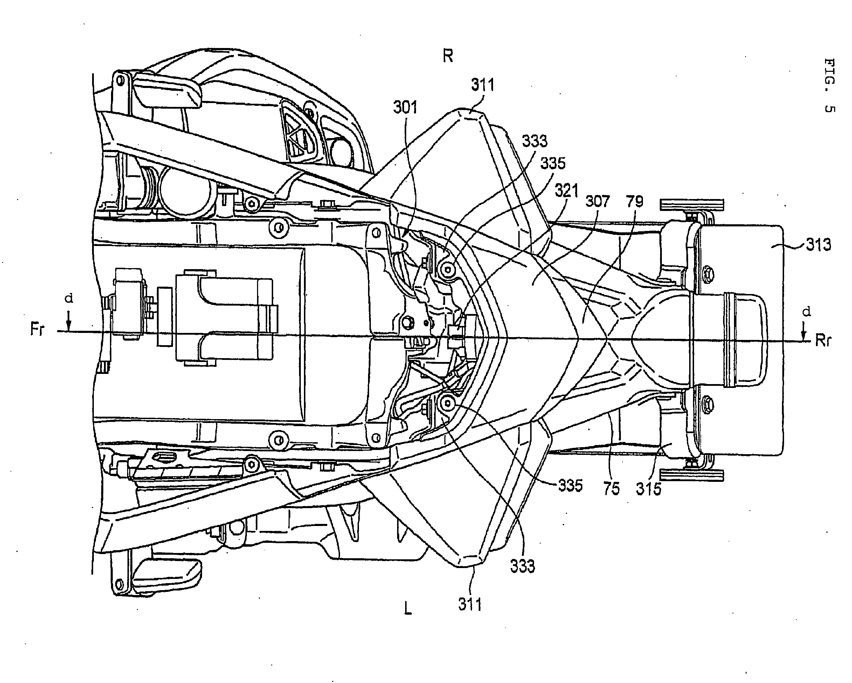

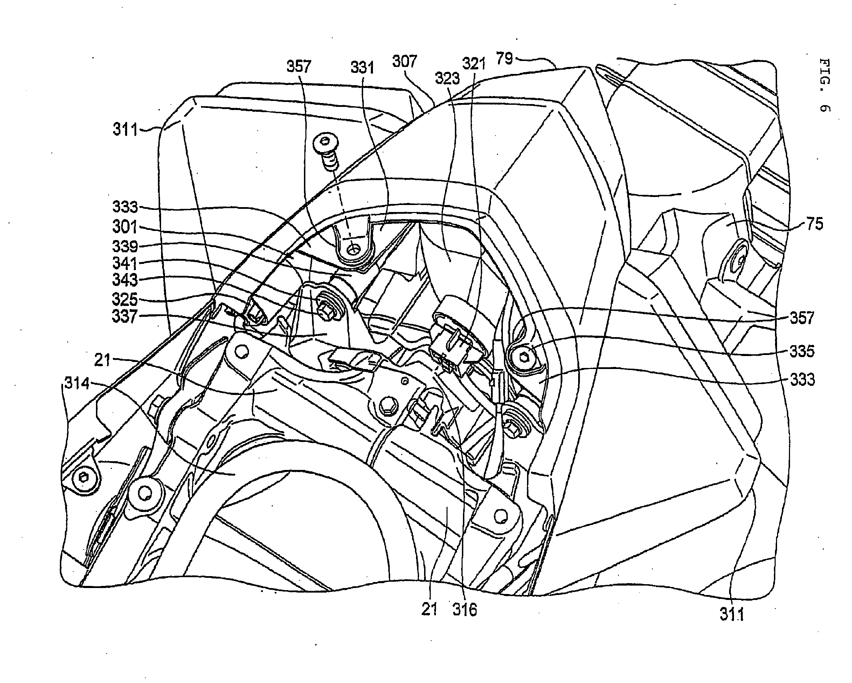

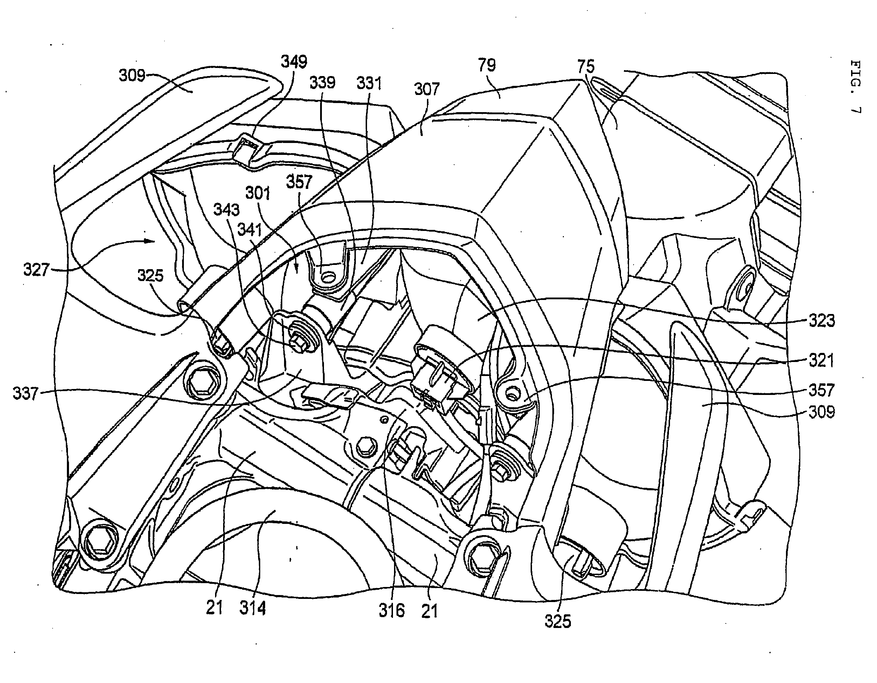

FIG. 3 is a side view of a left rear portion of the vehicle body, FIG. 4 is a plan view of the pillion seat and a rear center cowl, FIG. 5 is a plan view of the rear center cowl in the condition where the pillion seat has been dismounted, FIG. 6 is a perspective view showing an opening in the rear center cowl, and FIG. 7 is a perspective view showing a condition where rear winker covers have been dismounted from the condition shown in FIG. 6.

The rear cowl 73 for covering the rear portion of the body frame 11 and the rear fender 75 disposed on the lower side of the rear cowl 73 so as to cover the rear wheel 47 on the upper side of the rear wheel 47 are mounted to rear portions of the body frame 11. The rear cowl 73 is mounted to the seat rails 21 so as to cover the rear portions of the body frame 11, specifically, rear portions of the seat rails 21 and a rear stay 23. The rear cowl 73 is provided in its upper portion with an opening 301 (see FIG. 5) which can be closed with the pillion seat 67, and the pillion seat 67 in the closing state is supported by the seat rails 21.

The rear cowl 73 is composed of a left-right pair of rear side cowls 305, 305 for covering the seat rails 21 on both lateral sides of the seat rails 21, and a rear center cowl 307 which is a center cover fastened to upper portions of both the rear side cowls 305, 305 so as to cover the tail-and-stop lamp 304 of the rear combination lamp 79 on the upper side of the tail-and-stop lamp 304. The rear combination lamp 79 has a structure in which the left-right pair of winkers 302 and the tail-and-stop lamp 304 between the left and right winkers 302 are united together.

The opening 301 is defined by upper edge portions of both the rear side cowls 305, 305 and the rear center cowl 307. A left-right pair of grab rails 309, 309 fastened to the seat rails 21 are disposed at rear portions of the rear side cowls 305, 305. A pair of winker covers 311, 311 for covering the upper side of the winkers 302 of the rear combination lamp 79 are mounted to both left and right sides of the rear center cowl 307. The rear fender 75 is provided with the plate mounting parts 315 for mounting the license plate 313. In the figures, symbol 314 denotes a U-shaped lock, and symbol 316 denotes a seat lock cover.

Meanwhile, in relation to the rear combination lamp of a motorcycle according to the prior art, a configuration in which the rear combination lamp as a whole is drawn out rearwards from a rear cowl has been disclosed, for example, as in Japanese Patent No. 4104344. From and into the rear combination lamp in the state of being drawn out from the rear cowl, a tail lamp bulb and a pair of winker bulbs can be replaced, with lenses kept attached thereto. In addition, mounting the rear combination lamp into position can be carried out by an operation reverse to the drawing-out operation. Here, while the maintainability has been enhanced by facilitating the dismounting of the rear combination lamp as a whole in the case of the rear combination lamp according to the exemplary prior art, there is a request for the maintenance to be carried out through a more easier operation.

The motorcycle 1 according to the present embodiment provides the rear combination lamp with a configuration which meets the above-mentioned request.

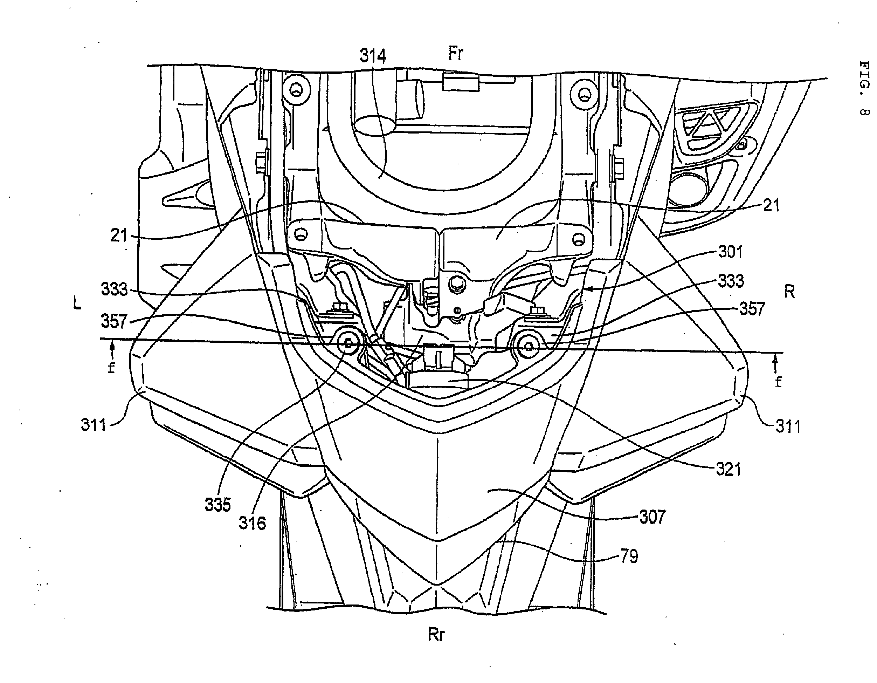

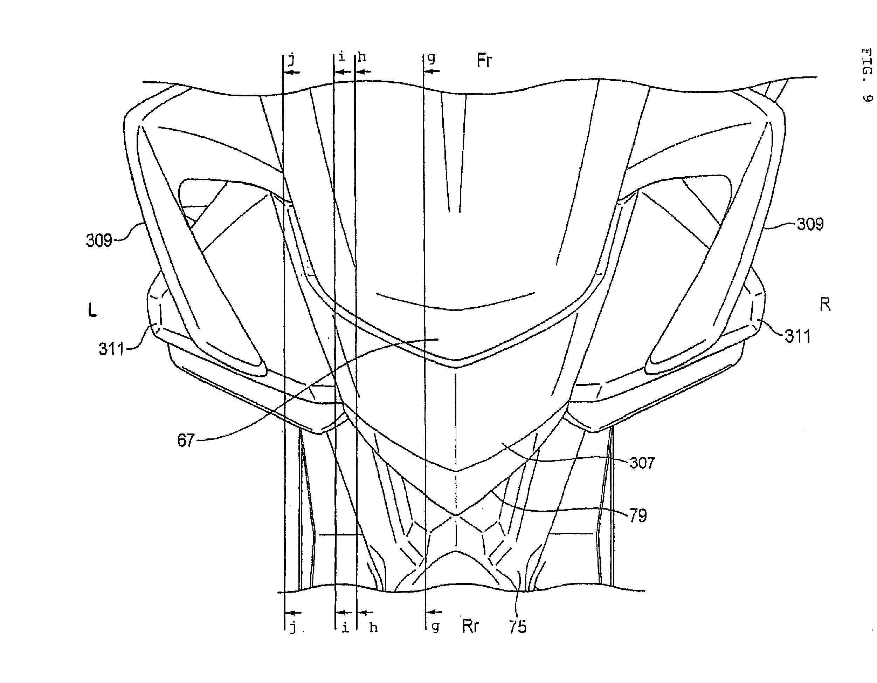

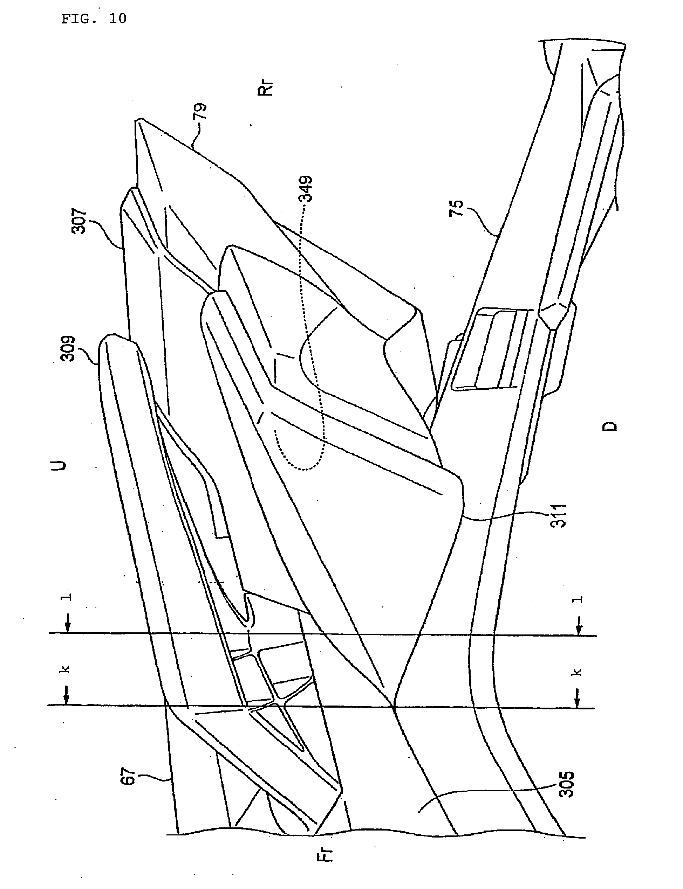

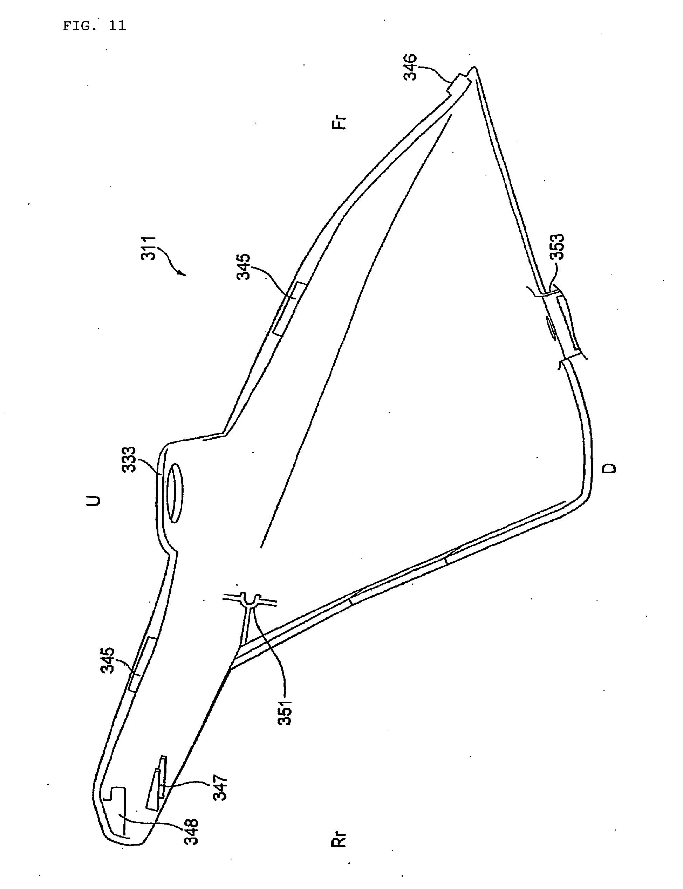

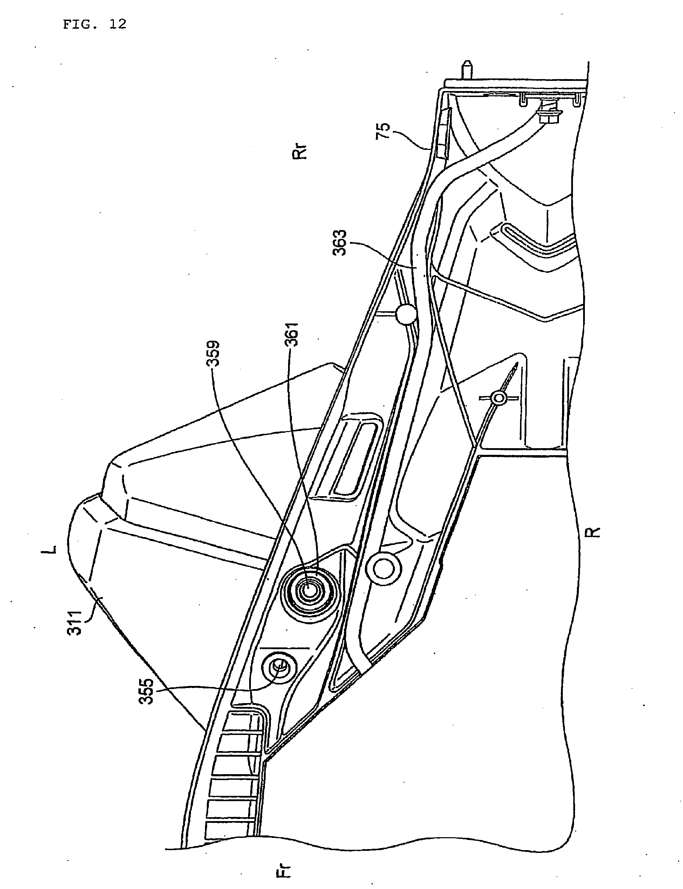

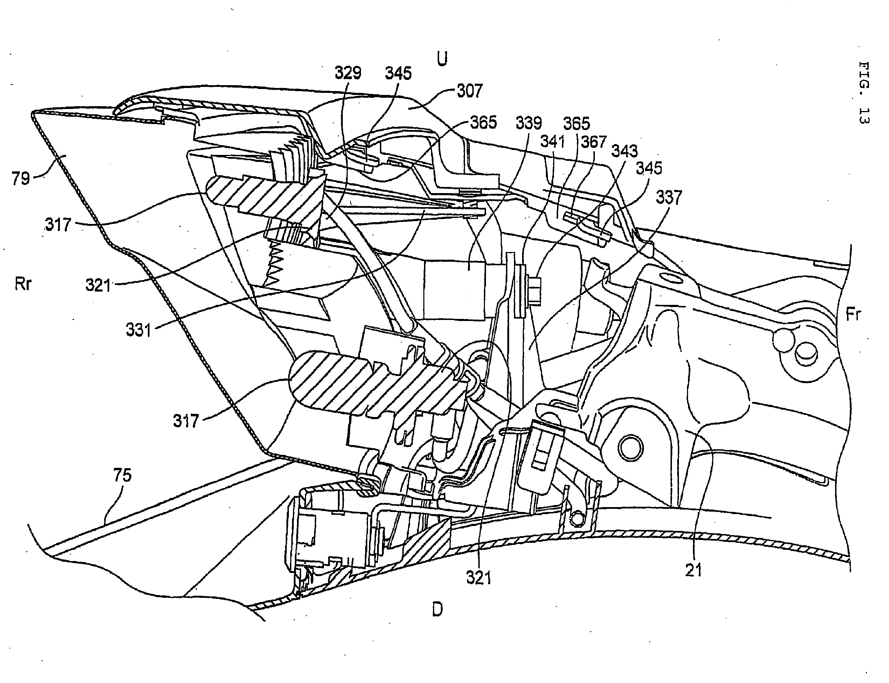

FIG. 8 is a plan view of a co-fastened portion of the rear center cowl, FIG. 9 is a plan view of a rear portion of a vehicle body, with the pillion seat mounted thereto, FIG. 10 is a side view of a left rear portion of a vehicle body, as seen through the winker cover, FIG. 11 is a side view of the right winker cover as viewed from the inner side, FIG. 12 is a bottom view of the left winker cover as viewed from the lower side of the rear fender, and FIG. 13 is a sectional view taken along line d-d of FIG. 5.

The rear combination lamp 79 is mounted to a rear portion of the rear fender 75, the opening 301 in an upper portion of which can be closed with the pillion seat 67. The rear center cowl 307 covers the upper side of a tail lamp part of the rear combination lamp 79. A rear portion of the rear combination lamp 79 is disposed in rear portions of the rear side cowls 305 in the state of being exposed at the rear ends of the rear side cowls 305 so as to face rearwards.

The rear combination lamp 79 has a tail-and-stop lamp bulb 317 (see FIG. 13) and a pair of winker bulbs 319, 319. The tail lamp bulb 317 has rear portions of a tail lamp socket 321 and a tail lamp reflector 323 exposed in the opening 301. The winker bulb 319 has rear portions of winker sockets 325 exposed in the opening 301. The winker covers 311 cover the upper side of winker parts 327 (see FIG. 7) and winker sockets 325 in the rear combination lamp 79.

A stay (a stay part 331 formed at a reflector back surface 329, shown in FIG. 13, of the rear combination lamp 79) is provided on the upper side in the rear combination lamp 79. On the other hand, the winker cover 311 is provided, on the lower side of the pillion seat 67, with an arm part 333 extending toward the inner side in the vehicle width direction. The arm part 333 of the winker cover 311 is fastened to the stay part 331 of the rear combination lamp 79 by a hexagon socket screw 335 (see FIG. 8).

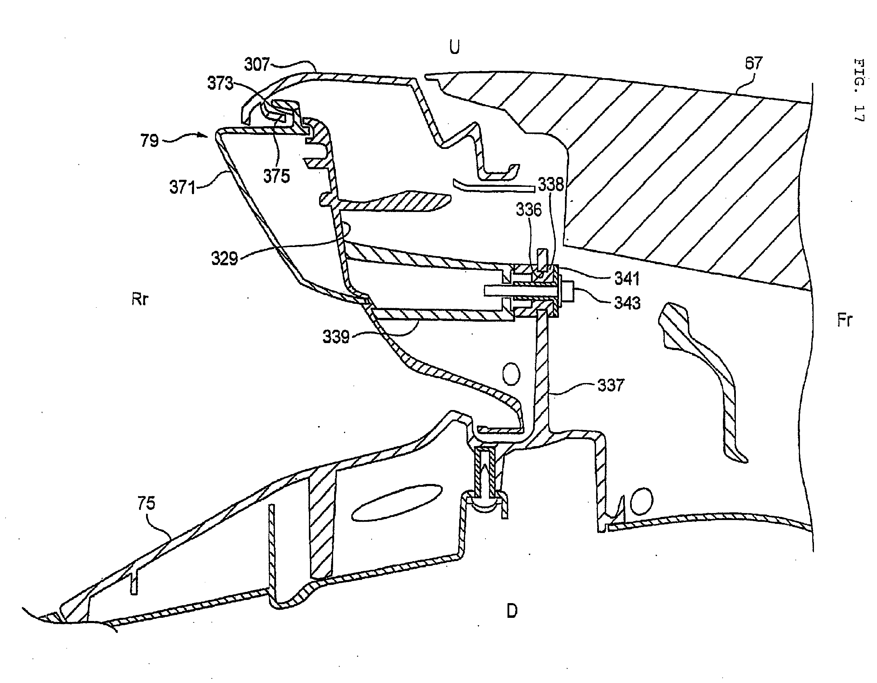

A left-right pair of fixing plates 337, 337 (see FIGS. 6 and 13) are provided at rear portions of the rear fender 75. The fixing plates 337, 337 are erected inside the opening 301. A left-right pair of fixing columns 339, 339 projecting toward the vehicle front side in the inside are projectingly provided on the reflector back surface 329 of the rear combination lamp 79. Each of the fixing columns 339, 339 has a female screw in its tip surface. An annular rubber is fitted in a hole 336 (see FIG. 17) formed in an upper portion of each of the fixing plates 337, 337. The fixing column 339 is rubber mounted to the fixing plate 337 by a bolt 343 by way of a collar 341 inserted through the rubber 338.

As shown in FIG. 11, the winker cover 311, made of resin, is formed in a pyramidal bowl-like shape which is roughly inverted triangular in side view and a central portion of which projects toward the back side of the sheet of the drawing. At a central portion of the upper edge of the winker cover 311, the arm part 333 projects toward the vehicle inner side. A pair of side part claws 345, 345 are provided respectively on the front and rear sides of the arm part 333. A front part claw 346 is formed at a front portion of the winker cover 311, and two rear part claws 347, 347 are provided at a rear portion of the winker cover 311. In addition, the winker cover 311 is provided, at an inner surface of a rear portion thereof, with a projection 351 for engagement with a U-shaped groove 349 (see FIG. 10) provided in a side surface of the rear combination lamp 79.

In addition, the winker cover 311 is provided at its lower portion with a fixing hole part 353, and the fixing hole part 353 is attached to the rear fender 75 by a screw 355 from the lower side, as shown in FIG. 12. The upper portion of the winker cover 311 is fixed to the stay part 331 through the arm part 333, and the lower portion of the winker cover 311 is fixed to the rear fender 75, whereby fixation rigidity of the winker cover 311 is enhanced. Incidentally, in FIG. 12, symbol 359 denotes a bolt for fixing the rear combination lamp 79 from the lower side of the rear fender 75 by way of a rubber mount 361, and symbol 363 denotes a harness for a license plate bulb (not shown).

The rear center cowl 307 is formed with a fixing seat 357 at a position for overlapping with the arm part 333 on the upper side. The fixing seat 357 is fixed to the stay part 331, with the arm part 333 therebetween, by the hexagon socket screw 335. In other words, the fixing seat 357, the arm part 333, and the stay part 331 are co-fastened. With the stay part 331 formed at the reflector back surface 329 of the rear combination lamp 79, the winker cover 311 and the rear center cowl 307 can both be fixed to the same location, without using any fixing member for exclusive use.

Since the arm part 333 provided as part of the winker cover 311 and extending toward the inner side in the vehicle width direction is thus fastened to the stay part 331 of the rear combination lamp 79, release of the fastening of the arm part 333 makes it possible to dismount only the winker cover 311. The removal of the winker cover 311 ensures that the winker socket 325 is exposed to enable easy replacement, without need to dismount the rear combination lamp as a whole as in the conventional structure.

As shown in FIG. 13, the rear center cowl 307 is provided at its side portions with ribs 365, 365 extending downwards. The ribs 365, 365 are provided with slits 367, and the side part claws 345, 345 of the winker covers 311 are locked in the slits 367. The side part claws 345, 345 of the winker covers 311 are slidingly locked in the slits 367 provided, along the vehicle front-rear direction, in the ribs 365, 365 droopingly provided on the rear center cowl 307, whereby movement (backlash) of the winker covers 311 in the slit width direction (vehicle up-down direction) is restrained. In addition, even after the fastening of the arm part 333 to the stay part 331 is released, the winker cover 311 remains tentatively fixed to the rear center cowl 307 owing to the engagement between the slit 367 and the side part claw 345.

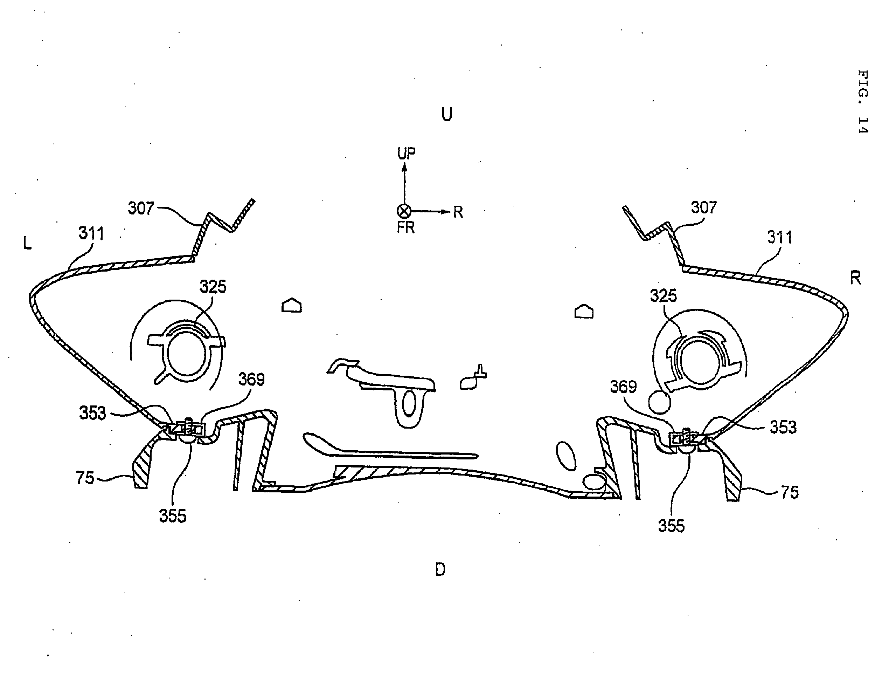

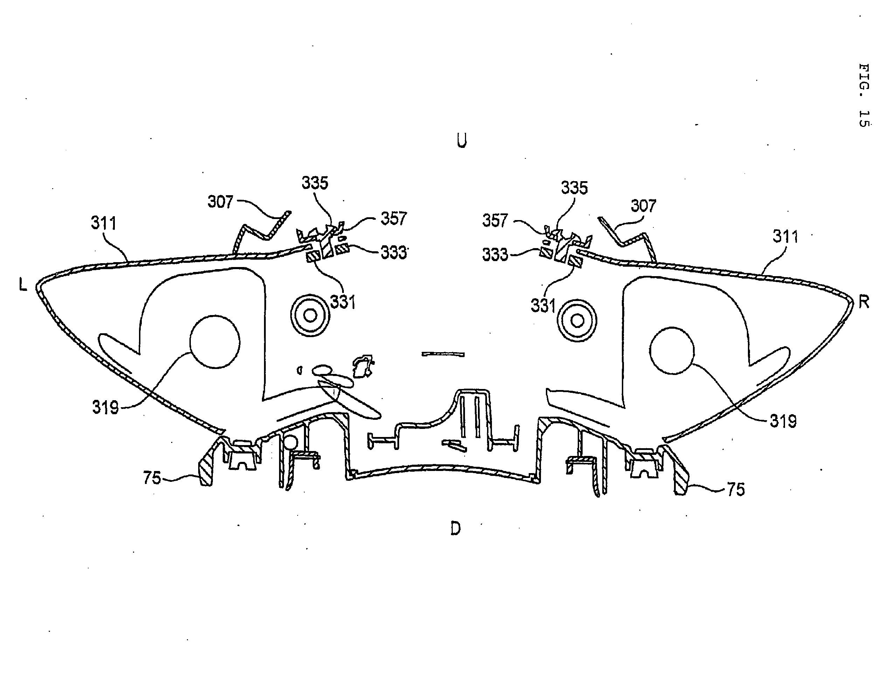

FIG. 14 is a sectional view taken along line e-e of FIG. 3, and FIG. 15 is a sectional view taken along line f-f of FIG. 8.

The fixing hole part 353 of the winker cover 311 fixed to the rear fender 75 by the screw 355 is fixed through a clip nut 369 which is angular U-shaped in section.

The winker cover 311 is provided with the fixing hole part 353 at a lower portion thereof, and the fixing hole part 353 is fixed to the rear fender 75 from the lower side by the screw 355, as shown in FIG. 12. The arm part 333 of the winker cover 311 shown in FIG. 15 is fixed in the state of being clamped between the stay part 331 and the fixing seat 357.

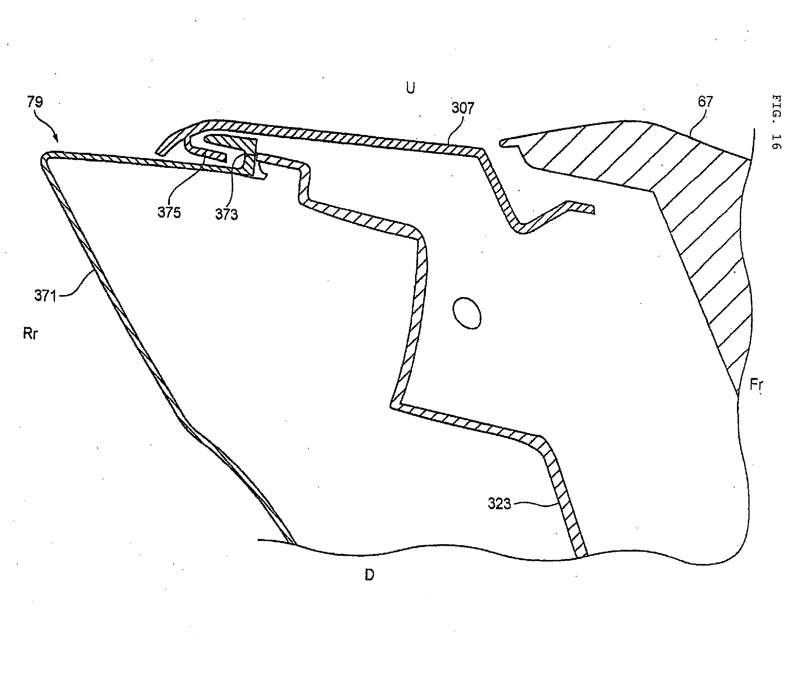

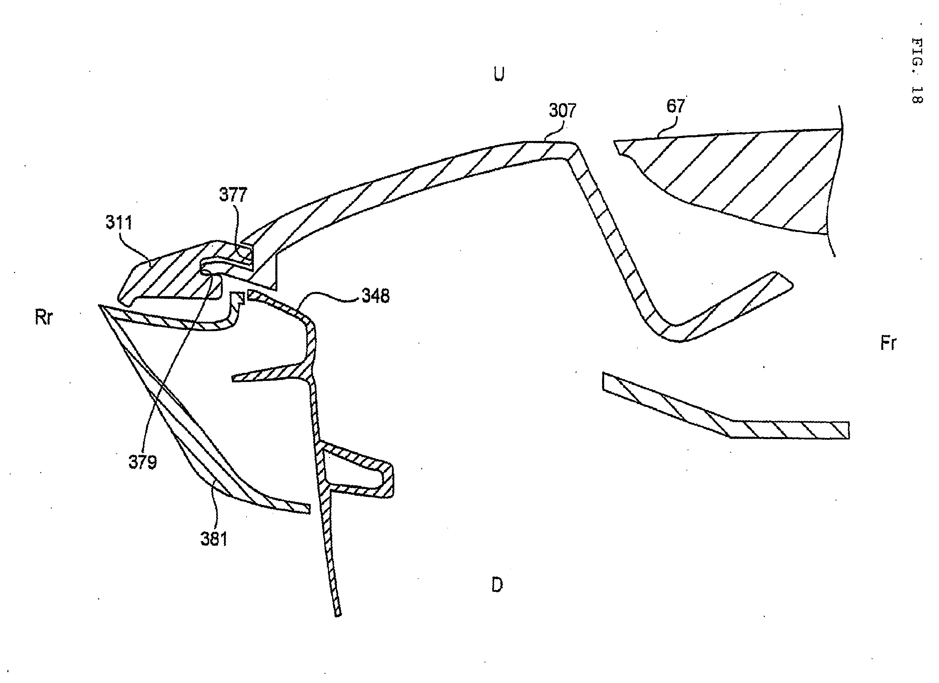

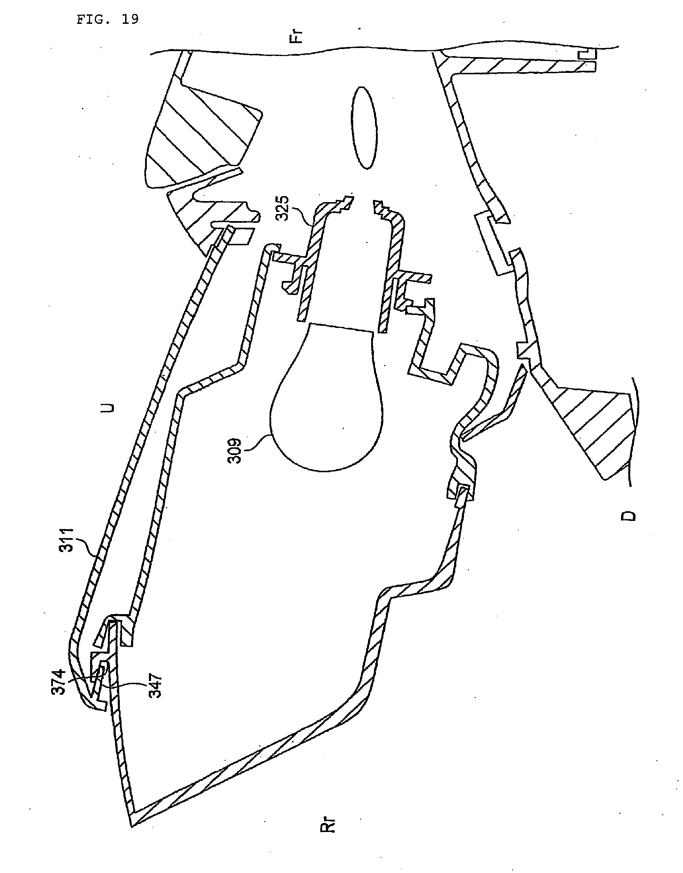

FIG. 16 is a sectional view taken along line g-g of FIG. 9, FIG. 17 is a sectional view taken along line h-h of FIG. 9, FIG. 18 is a sectional view taken along line i-i of FIG. 9, and FIG. 19 is a sectional view taken along line j-j of FIG. 9.

As shown in FIGS. 16 and 17, the rear center cowl 307 is provided at the lower surface of a rear portion thereof with a rear part claw 375 for engagement with a recess 373 provided in the upper surface of a tail-and-stop lens 371 of the rear combination lamp 79. As shown in FIG. 19, the winker cover 311 is provided at its rear part surface with a rear part claw 347 for engagement with a recess 374 provided in the upper surface of a winker lens. Thus, rear portions of the winker covers 311 and the rear center cowl 307 are engaged with and fixed to the rear combination lamp 79 by the claws 375, 347 and the recess 373 and the recesses 374. This ensures that the gaps between the rear combination lamp 79 and the winker covers 311 as well as the rear center cowl 307 can be held in small size and in backlash-free state, while achieving space savings as compared with a fixing structure in which fastening members are used.

The rear center cowl 307 is provided at its rear portions with first recesses 377 for engagement with rear portions of the inner side edges of the winker covers 311. The winker cover 311 is provided at a rear portion of the lower surface thereof with a second recess 379 which is for engagement with the rear edge of the rear center cowl 307 and which is formed by the upper surface of the rear center cowl 307 and a rear part claw 348. To the first recess 377 provided at the rear portion of the rear center cowl 307 so as to face rearwards, the second recess 379 provided at the rear portion of each winker cover 311 so as to face forwards is fitted in the state of facing forwards, whereby the rear portions of the rear center cowl 307 are engaged with the rear portions of the winker covers 311 through projection-recess engagement. Incidentally, in FIG. 18, symbol 381 denotes a winker of which an upper portion is covered with the winker cover 311.

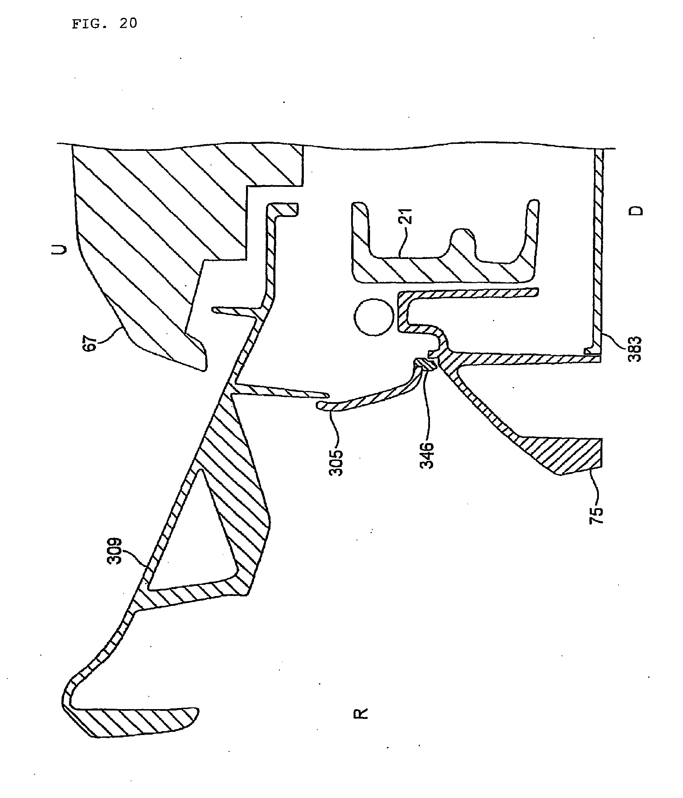

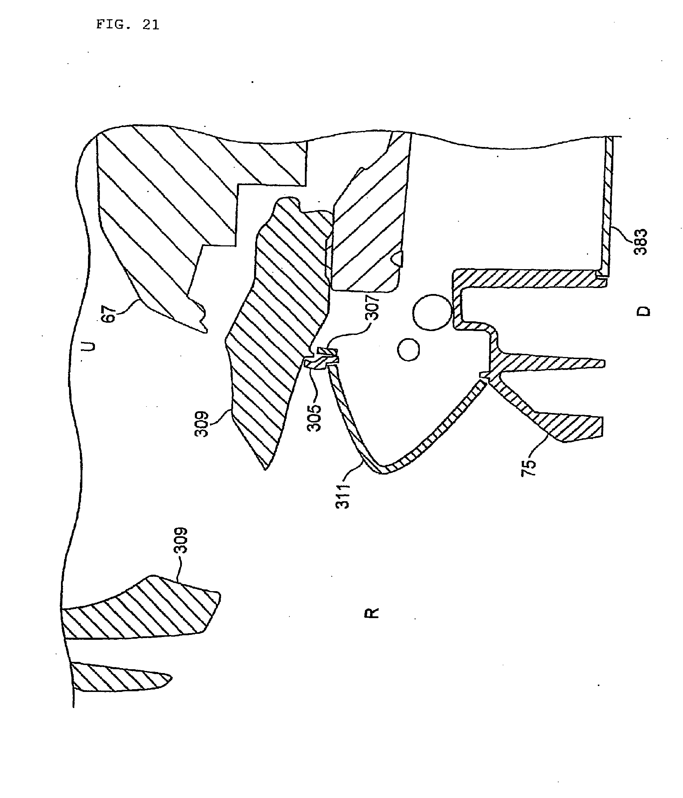

FIG. 20 is a sectional view taken along line k-k of FIG. 10, and FIG. 21 is a sectional view taken along line I-I of FIG. 10.

As shown in FIG. 20, the rear side cowls 305, 305 for covering the gaps between the grab rails 309 and the rear fender 75 are mounted to lower portions of the grab rails 309. An inner fender 383 is disposed on the inner side of the rear fender 75, and the inner fender 383 covers the lower side of the seat rails 21. A front part claw 346 of the winker cover 311 is locked to the inner side of the rear side cowl 305. As shown in FIG. 21, the rear ends of the rear side cowls 305, 305 are each clamped between the winker cover 311 and the rear center cowl 307.

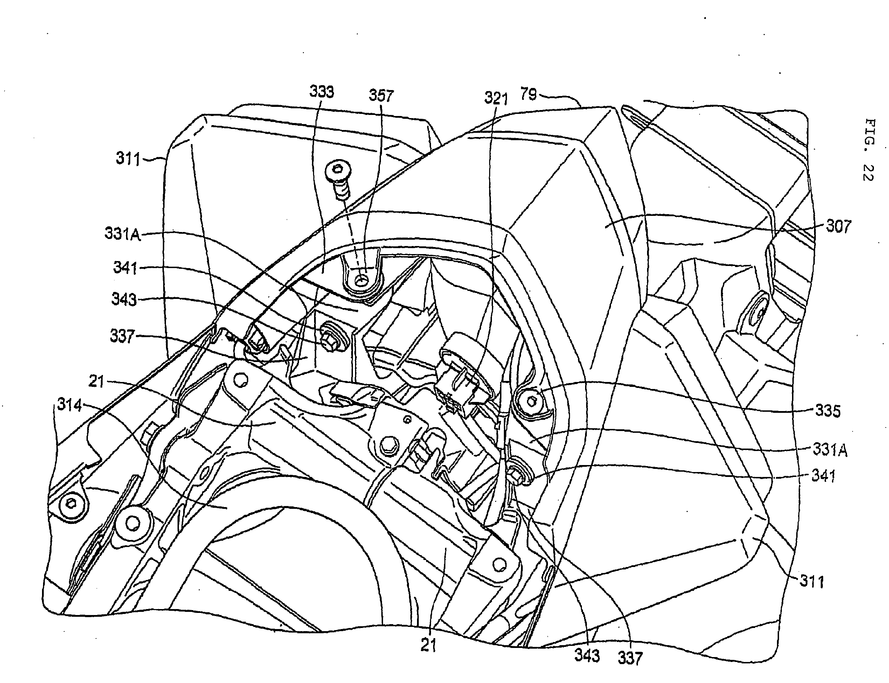

FIG. 22 is a perspective view of a modification in which a rear fender is formed with a stay part.

Incidentally, in the fixing structure for the winker covers 311 shown in FIG. 6, the fixing seat 357 of the rear center cowl 307 and the arm part 333 of the winker cover 311 have been co-fastened to the stay part 331 provided at the reflector back surface 329 of the rear combination lamp 79. In this connection, the stay part 331 may be replaced by a stay part 331A in which the erect tip of the fixing plate 337 is bent into an L-shape. According to this modification, the parts to be fixed can be fixed directly to the fixing plate 337 extending from the rear fender 75, so that fixation strength of the fixing seat 357 and the arm part 333 can be more enhanced. In addition, the reflector back surface 329 of the rear combination lamp 79 can be simplified in shape.

As has been described above, according to the motorcycle in the present embodiment, release of the fastening of the winker cover arm part 333 in the condition where the seat 67 has been removed ensures that only the winker cover 311 can be removed from the vehicle. Since the removal of the winker cover 311 causes the winker socket 325 in the rear combination lamp 79 to be exposed, maintenance of the winkers can be carried out by only removing the winker covers 311.

In addition, according to the motorcycle in the present embodiment, the winker covers 311 and the center cover 307 are locked together by slits 367 and the claws 345, so that the winker covers 311 can be prevented from backlash in their mounted state. Besides, at the time of dismounting the winker cover 311, the fastening of the winker cover arm part 333 is released, and thereafter the winker cover 311 is slid in the direction along the slit 367 to release the lock between the claw 345 and the slit 367, whereon it suffices to draw out the winker cover 311 toward the outer side. Accordingly, the winker cover 311 can be dismounted easily.

Besides, according to the motorcycle in the present embodiment, vertical vibrations of the winker covers 311 can be prevented by fastening the winker covers 311 in the vertical direction.

In addition, according to the motorcycle in the present embodiment, stays can be provided in the form of the stay parts 331 of the rear combination lamp 79, whereby the number of component parts can be restrained from increasing. Further, since the winker cover arm part 333 and the winker cover 311 are co-fastened at the stay parts 331, the number of fastening parts can be reduced.

Besides, according to the motorcycle in the present embodiment, the gaps between the rear combination lamp upper surface and the winker covers 311 as well as the center cover 307 can be reduced as much as possible, and vibrations of the rear ends of both the covers can be restrained.

In addition, according to the motorcycle in the present embodiment, mating and holding of the winker covers 311 and the center cover 307 at their rear portions can be achieved more assuredly.

The invention is directed to provide a saddle ride type vehicle in which maintenance of a rear combination lamp can be carried out easily.

The saddle ride type vehicle includes a rear cowl 73 for covering a rear portion of a body frame while having an opening capable of being closed with a rider's seat, and the rear combination lamp 79 having a tail lamp bulb and a pair of winker bulbs. In the vehicle, the rear combination lamp 79 is mounted to the body frame, stays are provided on the upper side in the rear combination lamp 79, and the vehicle further includes a center cover 307 for covering the upper side of a tail lamp part of the combination lamp 79, and winker covers 311 for covering the upper side of winker parts and winker sockets in the combination lamp 79. The winker cover 311 has an arm part located on the lower side of the rider's seat and extending toward the inner side in the vehicle width direction, and the arm part is fastened to the stay.

## Claims

1. A saddle ride type vehicle (1) comprising, at a rear portion of a body frame (11):
a rear cowl (73) for covering a rear portion of the body frame (11), the rear cowl (73) provided at its upper portion with an opening (301) capable of being closed with a rider's seat (67); and
a rear combination lamp (79) having a tail lamp and a left-right pair of winkers,
with a rear portion of the rear combination lamp (79) being disposed in a rear portion of the rear cowl (73) in the state of being exposed at the rear end of the rear cowl (73) so as to face rearwards, and winker sockets (325) in the rear combination lamp (79), and
a center cover (307) for covering the upper side of a tail lamp part of the rear combination lamp (79), **characterised by**, that the vehicle further includes winker covers (311) for covering the upper side of winker parts (327), and stays (331) are provided on the upper side in the rear combination lamp (79),
and the winker cover (311) having an arm part (333) located on the lower side of the rider's seat (67) and extending toward the inner side in the vehicle width direction, the arm part (333) being fastened to the stay (331 ).

2. The saddle ride type vehicle (1) according to claim 1,
wherein the center cover (307) is provided at side portions thereof with ribs (365) extending downwards,
the rib (365) is provided with a slit (367), and
the winker cover (311) is provided, at its side portion on the inner side in the vehicle width direction, with a side part claw (345) to be locked in the slit (367) in the center cover (307).

3. The saddle ride type vehicle (1) according to one of claims 1 or 2,
wherein a rear fender (75) disposed on the lower side of the rear cowl (73) and covering a rear wheel on the upper side of the rear wheel is mounted, and
a lower surface of the winker cover (311) is fastened by a lower surface of the rear fender (75).

4. The saddle ride type vehicle (1) according to any one of claims 1 to 3,
wherein the stay (331) is a stay part formed at a reflector back surface (329) of the rear combination lamp (79), and
the arm part (333) of the winker cover (311) and the center cover (307) are co-fastened to the stay part (331) of the rear combination lamp (79).

5. The saddle ride type vehicle (1) according to any one of claims 1 to 4,
wherein the winker covers (311) and the center cover (307) are provided at their rear portions with rear part claws (375) each of which is engaged with a recess formed in an upper surface of the rear combination lamp (79).

6. The saddle ride type vehicle according to any one of claims 1 to 5,
wherein the center cover (307) is provided at rear portions thereof with first recesses (377) for engagement with rear portions of inside edges of the winker covers (311), and
the winker cover (311) is provided at a rear portion of a lower surface thereof with a second recess (379) for engagement with a rear edge of the center cover.

## Patentansprüche

1. Fahrzeug vom Typ mit Aufsitzsattel (1), das an einem hinteren Abschnitt eines Rumpfrahmens (11) aufweist:
eine hintere Verkleidung (73) zum Abdecken eines hinteren Abschnitts des Rumpfrahmens (11), wobei die hintere Verkleidung (73) an ihrem oberen Abschnitt mit einer Öffnung (301) versehen ist, die mit einem Fahrersitz (67) verschließbar ist; und
eine hintere Kombinationsleuchte (79), die eine Heckleuchte und ein Links-Rechts-Paar von Blinkern aufweist,
wobei ein hinterer Abschnitt der hinteren Kombinationsleuchte (79) in einem hinteren Abschnitt der hinteren Verkleidung (73) in einem Zustand angeordnet ist, in dem sie am Hinterende der hinteren Verkleidung (73) nach hinten weisend freiliegt,
und Blinkersockel (335) in der hinteren Kombinationsleuchte (79), und eine mittlere Abdeckung (307) zum Abdecken der Oberseite des Heckleuchtenteils der hinteren Kombinationsleuchte (79),
**dadurch gekennzeichnet, dass** das Fahrzeug ferner enthält:
Blinkerabdeckungen (311) zum Abdecken der Oberseite von Blinkerteilen (327),
und Stege (331), die an der Oberseite in der hinteren Kombinationsleuchte (79) vorgesehen sind,
und wobei die Blinkerabdeckung (311) ein Armteil (333) aufweist, das an der Unterseite des Fahrersitzes (67) angeordnet ist und sich zur Innenseite der Fahrzeugbreitenrichtung erstreckt, wobei das Armteil (333) an dem Steg (331) befestigt ist.

2. Das Fahrzeug vom Typ mit Aufsitzsattel (1) nach Anspruch 1, worin die mittlere Abdeckung (307) an ihren Seitenabschnitten mit sich nach unten erstreckenden Rippen (365) versehen ist, die Rippe (365) mit einem Schlitz (367) versehen ist, und die Blinkerabdeckung (311) an ihrem Seitenabschnitt an der Innenseite in der Fahrzeugbreitenrichtung mit einer Seitenteilkralle (345) versehen ist, die in dem Schlitz (367) in der mittleren Abdeckung (307) zu arretieren ist.

3. Das Fahrzeug vom Typ mit Aufsitzsattel (1) nach einem der Ansprüche 1 oder 2, worin eine hintere Abdeckung (75) angebracht ist, die an der Unterseite der hinteren Verkleidung (73) angeordnet ist und ein Hinterrad an der Oberseite des Hinterrads abdeckt, und eine Unterseite der Blinkerabdeckung (33) an einer Unterseite der hinteren Abdeckung (75) befestigt ist.

4. Das Fahrzeug vom Typ mit Aufsitzsattel (1) nach einem der Ansprüche 1 bis 3, worin der Steg (331) ein Stegteil ist, das an einer Reflektorrückseite (329) der hinteren Kombinationsleuchte (79) ausgebildet ist, und
das Armteil (333) der Blinkerabdeckung (311) und die mittlere Abdeckung (307) miteinander an dem Stegteil (331) der hinteren Kombinationsleuchte (79) befestigt sind.

5. Das Fahrzeug vom Typ mit Aufsitzsattel (1) nach einem der Ansprüche 1 bis 4, worin die Blinkerabdeckungen (311) und die mittlere Abdeckung (307) an ihren hinteren Abschnitten mit Rückteilkrallen (375) versehen sind, deren jede mit einer Vertiefung in Eingriff steht, die in einer Oberseite der hinteren Kombinationsleuchte (79) ausgebildet ist.

6. Das Fahrzeug vom Typ mit Aufsitzsattel nach einem der Ansprüche 1 bis 5, worin die mittlere Abdeckung (307) an ihren hinteren Abschnitten mit ersten Vertiefungen (377) zum Eingriff mit hinteren Abschnitten von Innenrändern der Blinkerabdeckungen (311) versehen ist, und
die Blinkerabdeckung (311) an einem hinteren Abschnitt ihrer Unterseite mit einer zweiten Vertiefung (379) zum Eingriff mit einem Hinterrand der mittleren Abdeckung versehen ist.

## Revendications

1. Véhicule de type à selle (1) comprenant, au niveau d'une portion arrière d'une ossature de châssis (11) :
un auvent arrière (73) permettant de couvrir une portion arrière de l'ossature de châssis (11), l'auvent arrière (73) étant pourvu au niveau de sa portion supérieure d'une ouverture (301) capable d'être fermée avec un siège (67) de pilote ; et
une combinaison de feux arrière (79) comportant un feu arrière et une paire de clignotants gauche-droit,
une portion arrière de la combinaison de feux arrière (79) étant disposée dans une portion arrière de l'auvent arrière (73) dans un état exposé à l'extrémité arrière de l'auvent arrière (73) de façon à être orientée vers l'arrière, et des douilles de clignotant (325) dans la combinaison de feux arrière (79), et
un couvre-centre (307) permettant de couvrir le côté supérieur d'une partie de feu arrière de la combinaison de feux arrière (79), **caractérisé en ce que** le véhicule inclut en outre
des couvre-clignotant (311) permettant de couvrir le côté supérieur des parties de clignotant (327), et des étais (331) étant disposés sur le côté supérieur dans la combinaison de feux arrière (79), et
le couvre-clignotant (311) comportant une partie de bras (333) située sur le côté inférieur du siège (67) de pilote et s'étendant vers le côté interne dans la direction de la largeur du véhicule, la partie de bras (333) étant arrimée à l'étai (331).

2. Véhicule de type à selle (1) selon la revendication 1,
dans lequel le couvre-centre (307) est pourvu, au niveau de portions latérales de celui-ci, de nervures (365) s'étendant vers le bas,
la nervure (365) est pourvue d'une fente (367), et le couvre-clignotant (311) est pourvu, au niveau de sa portion latérale sur le côté interne dans la direction de la largeur du véhicule, d'une griffe de partie latérale (345) à verrouiller dans la fente (367) dans le couvre-centre (307).

3. Véhicule de type à selle (1) selon l'une des revendications 1 ou 2,
dans lequel un garde-boue arrière (75) disposé sur le côté inférieur de l'auvent arrière (73) et couvrant une roue arrière sur le côté supérieur de la roue arrière est monté, et
une surface inférieure du couvre-clignotant (311) est arrimée par une surface inférieure du garde-boue arrière (75).

4. Véhicule de type à selle (1) selon l'une quelconque des revendications 1 à 3,
dans lequel l'étai (331) est une partie d'étai formée au niveau d'une surface de dos de réflecteur (329) de la combinaison de feux arrière (79), et
la partie de bras (333) du couvre-clignotant (311) et le couvre-centre (307) sont coarrimés à la partie d'étai (331) de la combinaison de feux arrière (79).

5. Véhicule de type à selle (1) selon l'une quelconque des revendications 1 à 4,
dans lequel les couvre-clignotant (311) et le couvre-centre (307) sont pourvus, au niveau de leurs portions arrière, de griffes de partie arrière (375) dont chacune est mise en prise avec un évidement formé dans une surface supérieure de la combinaison de feux arrière (79).

6. Véhicule de type à selle selon l'une quelconque des revendications 1 à 5,
dans lequel le couvre-centre (307) est pourvu, au niveau des portions arrière de celui-ci, de premiers évidements (377) pour mise en prise avec des portions arrière de bords intérieurs des couvre-clignotant (311), et
le couvre-clignotant (311) est pourvu au niveau d'une portion arrière d'une surface inférieure de celui-ci, d'un second évidement (379) pour mise en prise avec un bord arrière du couvre-centre.
